# FASCICULE DE BREVET EUROPEEN

(11) **EP 2 673 950 B1**
(45) Date de publication et mention de la délivrance du brevet: **05.11.2014**
(21) Numéro de dépôt: 12704055.8
(22) Date de dépôt: 10.02.2012
(51) Int. Cl.: H04N 5/347, H04N 5/374, H04N 5/3745

(54) **CAPTEUR D'IMAGE LINEAIRE A DEUX LIGNES ET A PIXELS PARTAGES**
ZWEIZEILIGER LINEARER SHARED-PIXEL-BILDSENSOR
TWO-LINE, SHARED-PIXEL LINEAR IMAGE SENSOR

(30) Priorité: 10.02.2011 FR 1151097
(43) Date de publication de la demande: 18.12.2013
(73) Titulaire: E2V Semiconductors, 38120 Saint Egrève (FR)
(72) Inventeur: GUILLON, Marie, F-38000 Grenoble (FR); LIGOZAT, Thierry, F-38950 Quaix en Chartreuse (FR)
(74) Mandataire: Guérin, Michel
(86) Numéro de dépôt international: PCT/EP2012/052267
(87) Numéro de publication internationale: WO 2012/107542

(56) Documents cités:
- EP-A1- 1 195 985
- EP-A2- 2 109 223
- WO-A1-01/69284
- FR-A1- 2 906 080
- JP-A- 11 266 403
- US-A1- 2010 134 673
- US-B1- 6 906 749

## Description

L'invention concerne les capteurs d'image, et plus particulièrement les capteurs d'image linéaires destinés à observer une ligne d'image à la fois, en mode de scanner. Ces capteurs recueillent une image complète d'un objet ou d'une scène en faisant défiler l'objet ou la scène à vitesse constante devant le capteur et en reconstituant l'image par juxtaposition des lignes observées.

Ces capteurs sont utilisés notamment pour l'inspection industrielle de produits placés sur un tapis roulant. D'autres applications sont possibles dans le domaine de l'observation spatiale par exemple.

Un des problèmes auxquels on souhaite apporter une solution est l'obtention d'un signal d'image d'amplitude suffisante même lorsque le défilement relatif de l'objet par rapport au capteur est très rapide. On comprend en effet que si le défilement est rapide, le temps d'intégration de la lumière doit être très bref, faute de quoi l'image n'aurait qu'une très mauvaise résolution dans le sens du défilement. Mais si le temps d'intégration est très bref, peu de photons sont recueillis par les pixels du capteur.. La technologie MOS à pixels actifs est préférée en raison notamment de la compatibilité qu'elle permet entre la fabrication des pixels proprement dits et la fabrication des circuits électroniques périphériques qui servent à commander le capteur et à traiter l'image électronique recueillie.

Par ailleurs, pour améliorer le rapport signal/bruit de la lecture d'une image, on a déjà proposé depuis longtemps d'utiliser des barrettes multilinéaires fonctionnant en défilement et intégration de signal (ou capteurs TDI, de l'anglais "Time Delay Integration") dans lesquels une image d'une ligne de points d'une scène observée est renforcée par l'addition d'images successives prises par N lignes photosensibles observant successivement une même ligne de la scène au fur et à mesure que la scène défile devant le capteur.

A temps d'exposition constante, la sensibilité est améliorée dans le rapport du nombre N de lignes. Le rapport signal sur bruit est amélioré dans un rapport pouvant aller de la racine carrée de N à N.

La réalisation d'un capteur TDI en technologie CCD est relativement facile : l'addition des signaux point à point se fait simplement en vidant dans une ligne de pixels les charges générées et accumulées dans la ligne précédente, en synchronisme avec le déplacement relatif de la scène et du capteur. La dernière ligne de pixels, ayant accumulé N fois les charges engendrées par la ligne d'image observée, peut être lue.

La réalisation d'un capteur TDI en technologie MOS est plus difficile ; elle passe par la réalisation de pixels à multiples grilles fonctionnant par transferts de charges à la manière des capteurs CCD mais avec une technologie différente présentant des risques de mauvais transferts d'un pixel au suivant. Ces pixels ne sont pas des pixels actifs, ils ne comprennent que des moyens de stockage et de transfert de charges mais pas de moyens de conversion charge-tension ou charge-courant à l'intérieur du pixel.

On peut signaler de plus que l'utilisation de capteurs à multiples lignes de pixels peut poser des problèmes en cas de mauvaise synchronisation ou de mauvaise régularité du défilement de la scène observée ; en effet, si le défilement n'est pas bien synchronisé ou pas bien régulier, l'addition de signaux vus par les différentes lignes sera faussée.

On propose selon l'invention une solution pour réaliser un capteur linéaire très rapide, ayant une sensibilité et un rapport signal sur bruit améliorés par rapport à un capteur de technologie MOS qui n'aurait qu'une ligne de pixels, mais sans utiliser de technologie complexe pour la réalisation des pixels.

La solution selon l'invention repose sur l'utilisation de deux lignes de pixels seulement, fonctionnant en mode TDI mais utilisant pourtant des pixels actifs avec une conversion charge-tension au sein du pixel. Selon l'invention, les pixels de même rang des deux lignes utilisent chacun une photodiode et un noeud de stockage de charges avec une grille de transfert adjacente à la photodiode et au noeud de stockage pour transférer vers le noeud de stockage de charges les charges accumulées dans la photodiode. Le noeud de stockage est partagé entre les deux pixels de même rang, et les charges des deux photodiodes sont successivement transférées dans ce noeud avant la lecture du potentiel pris par le noeud du fait de ces charges ; l'intervalle de temps qui sépare les deux transferts de charge correspond sensiblement au temps qui sépare le passage d'une même ligne d'image successivement devant les deux lignes de pixels.

Ainsi, le noeud de stockage interne au pixel mais commun à deux pixels voit successivement arriver deux paquets de charges électriques, issues de deux photodiodes différentes mais qui voient un même point d'image dans le défilement relatif entre la scène observée et le capteur.

Par conséquent, on a constaté que si on se limite à deux lignes de pixels, donc à un gain modeste en termes de sensibilité et de rapport signal sur bruit, on n'est pas obligé de modifier significativement la technologie de réalisation des pixels : ceux-ci peuvent rester des pixels actifs de technologie classique MOS (typiquement des pixels à une photodiode et quelques transistors).

Ainsi, l'invention propose un capteur d'image à transfert de charges fonctionnant en défilement et intégration de charges, le capteur comportant deux lignes adjacentes de P pixels en vue d'une observation d'une même ligne d'image successivement par les deux lignes de pixels avec une sommation des charges électriques générées par un point d'image dans les deux pixels de même rang des deux lignes, les pixels étant des pixels actifs de technologie MOS comprenant une photodiode, un noeud de stockage de charges et des moyens de transfert de charges de la photodiode vers le noeud de stockage, constitués par une grille de transfert adjacente à la photodiode et au noeud de stockage, caractérisé en ce que le noeud de stockage de charges est commun aux deux pixels de même rang, et en ce que des moyens de séquencement sont prévus pour établir un cycle périodique comprenant successivement une réinitialisation du potentiel du noeud de stockage, un échantillonnage du potentiel réinitialisé du noeud de stockage, un premier transfert de charges de la photodiode du premier pixel vers le noeud de stockage commun immédiatement après l'échantillonnage, un deuxième transfert de charges de la photodiode du deuxième pixel vers le noeud de stockage à la fin du cycle périodique, sans réinitialisation du potentiel du noeud de stockage entre les deux transferts, et un échantillonnage du potentiel du noeud de stockage après le deuxième transfert de charges.

Les deux transferts de charge se produisent l'un très vite après le début du cycle, l'autre très peu avant la fin du cycle. L'intervalle de temps qui les sépare est sensiblement l'intervalle pendant lequel une ligne d'image s'est déplacée entre la première ligne de pixels et la deuxième ligne de pixels. Le temps de cycle périodique est un peu supérieur à cette durée puisque le premier transfert de charges ne peut pas intervenir avant l'échantillonnage du potentiel réinitialisé, et le deuxième transfert de charges doit être terminé au moment de l'échantillonnage final du potentiel du noeud de stockage.

En pratique, un pixel comprend, outre la photodiode spécifique au pixel et le noeud de stockage commun aux deux pixels de même rang : une grille respective de transfert adjacente d'un coté à une photodiode respective et de l'autre au noeud de stockage commun, un transistor de réinitialisation commun aux deux pixels, et un transistor de lecture commun aux deux pixels.

Dans une première réalisation, le capteur comprend pour les deux pixels de même rang un circuit de lecture comportant seulement deux capacités d'échantillonnage, pour recevoir respectivement un échantillon de potentiel du noeud de stockage après réinitialisation et un échantillon de potentiel du noeud de stockage après le double transfert de charges. Un convertisseur analogique-numérique convertit cycliquement la différence des tensions stockées dans ces capacités.

Dans ce cas, les moyens de séquencement exécutent successivement et cycliquement :
- au début d'un premier cycle, une réinitialisation du potentiel du noeud de stockage de charge,
- puis un échantillonnage du potentiel du noeud de stockage dans la première capacité,
- puis un transfert total de charges de la photodiode du premier pixel vers le noeud de stockage,
- puis, vers la fin du premier cycle, un transfert total des charges de la photodiode du deuxième pixel vers le noeud de stockage,
- puis un échantillonnage du potentiel du noeud de stockage dans la deuxième capacité,
- puis, au cours d'un deuxième cycle, la réinitialisation du potentiel du noeud de stockage et un deuxième échantillonnage de ce potentiel dans la première capacité,
- et seulement ensuite, après la fin du premier cycle, la conversion analogique numérique, de la différence entre l'échantillon de premier cycle stocké dans la deuxième capacité et l'échantillon de deuxième cycle stocké dans la première capacité.

Ce double échantillonnage n'est pas un double échantillonnage corrélé.

Dans une autre réalisation, on fait un double échantillonnage corrélé. Le capteur comprend pour les deux pixels de même rang un circuit de lecture ayant trois capacités d'échantillonnage, dont la première et la troisième sont dédiées à l'échantillonnage du potentiel après réinitialisation alors que la deuxième est dédiée à l'échantillonnage après le double transfert de charges.

Les moyens de séquencement exécutent alors successivement au cours d'une alternance de cycles impairs et de cycles pairs :
a) au début d'un cycle, une réinitialisation du potentiel du noeud de stockage de charge par le transistor de réinitialisation,
b) puis un échantillonnage du potentiel du noeud de stockage dans la première capacité pour un cycle impair, ou de la troisième capacité pour un cycle pair,
c) puis un transfert total de charges de la photodiode du premier pixel vers le noeud de stockage,
d) puis, vers la fin du cycle, un transfert total des charges de la photodiode du deuxième pixel vers le noeud de stockage,
e) puis un échantillonnage du potentiel du noeud de stockage dans la deuxième capacité,
f) puis, au cours du cycle suivant, la réinitialisation du potentiel du noeud de stockage et un deuxième échantillonnage de ce potentiel dans la troisième capacité pour un cycle suivant pair ou dans la première capacité pour un cycle suivant impair, et enfin la conversion analogique-numérique de la différence entre l'échantillon stocké dans la deuxième capacité à l'étape e et l'échantillon stocké dans la première ou la troisième capacité à l'étape b, les rôles des première et troisième capacités étant ainsi interchangés à chaque cycle.

Ce double échantillonnage est un double échantillonnage corrélé.

Dans ce cas on peut prévoir deux réalisations différentes : dans une réalisation, il y a un seul convertisseur analogique-numérique pour la conversion issue des signaux d'un pixel et on connecte alternativement sur une entrée de ce convertisseur soit la première capacité soit la troisième capacité selon le cycle en cours. L'autre entrée du convertisseur est reliée à la deuxième capacité. Dans une autre réalisation on prévoit deux convertisseurs l'un ayant une entrée connectée à la première capacité, l'autre ayant une entrée connectée à la troisième capacité, et on utilise alternativement la sortie de l'un ou de l'autre convertisseur selon le cycle en cours. Dans ce deuxième cas, c'est l'alternance de choix des convertisseurs plutôt que l'alternance du choix du stockage dans la première ou la troisième capacité qui permet de faire à chaque cycle un double échantillonnage corrélé.

Dans une autre réalisation encore, il y a deux convertisseurs analogique-numérique, une première et une troisième capacités pour prélever respectivement le premier et le troisième échantillons, chacune des deux capacités étant reliée à une première entrée d'un convertisseur respectif, et une deuxième et une quatrième capacités reliées respectivement à une deuxième entrée de chacun des convertisseurs pour stocker le deuxième échantillon en alternance un cycle sur deux, l'un des convertisseurs fournissant une conversion de la différence entre l'échantillon stocké dans la deuxième capacité et l'échantillon stocké dans la première capacité, l'autre convertisseur fournissant une conversion de la différence entre l'échantillon stocké dans la quatrième capacité et l'échantillon stocké dans la troisième capacité.

Les moyens de séquencement sont alors agencés pour exécuter cycliquement les opérations successives suivantes au cours d'une alternance de cycles impairs et de cycles pairs :
a) au début d'un cycle, une réinitialisation du potentiel du noeud de stockage de charge,
b) puis un échantillonnage du potentiel du noeud de stockage dans la première capacité pour un cycle impair, ou de la troisième capacité pour un cycle pair,
c) puis un transfert total de charges de la photodiode du premier pixel vers le noeud de stockage,
d) puis, vers la fin du cycle, un transfert total des charges de la photodiode du deuxième pixel vers le noeud de stockage,
e) puis un échantillonnage du potentiel du noeud de stockage dans la deuxième capacité pour un cycle impair ou la quatrième capacité pour un cycle pair,
f) puis, au cours du cycle suivant, la réinitialisation du potentiel du noeud de stockage et un deuxième échantillonnage de ce potentiel dans la troisième capacité pour un cycle suivant pair ou dans la première capacité pour un cycle suivant impair, et enfin la conversion analogique-numérique par le premier convertisseur pendant le cycle suivant pair de la différence entre l'échantillon stocké dans la deuxième capacité et l'échantillon stocké dans la première capacité ou la conversion analogique-numérique pendant le cycle suivant impair par le deuxième convertisseur de la différence entre l'échantillon stocké dans la quatrième capacité et l'échantillon stocké dans la troisième capacité.

On notera que la publication de brevet US 2010/0134673 décrit un capteur d'image comportant un noeud de stockage commun à plusieurs lignes (des lignes correspondant à des couleurs différentes) ; mais ce noeud est extérieur aux lignes de pixels et n'est pas adjacent aux grilles de transfert de charges.

D'autres caractéristiques et avantages de l'invention apparaîtront à la lecture de la description détaillée qui suit et qui est faite en référence aux dessins annexés dans lesquels :
- la figure 1 représente un schéma d'organisation des pixels d'un capteur linéaire selon l'invention ;
- la figure 2 représente un circuit de lecture du signal issu des pixels reliés à un conducteur de colonne ;
- la figure 3 représente le chronogramme des signaux permettant cette lecture ;
- la figure 4 représente une variante de circuit de lecture ;
- la figure 5 représente le chronogramme des signaux associés à la variante de la figure 4 ;
- la figure 6 représente une autre variante de circuit de lecture ;
- la figure 7 représente encore une autre variante de circuit de lecture ;
- la figure 8 représente un chronogramme des signaux associés à la variante de la figure 7.

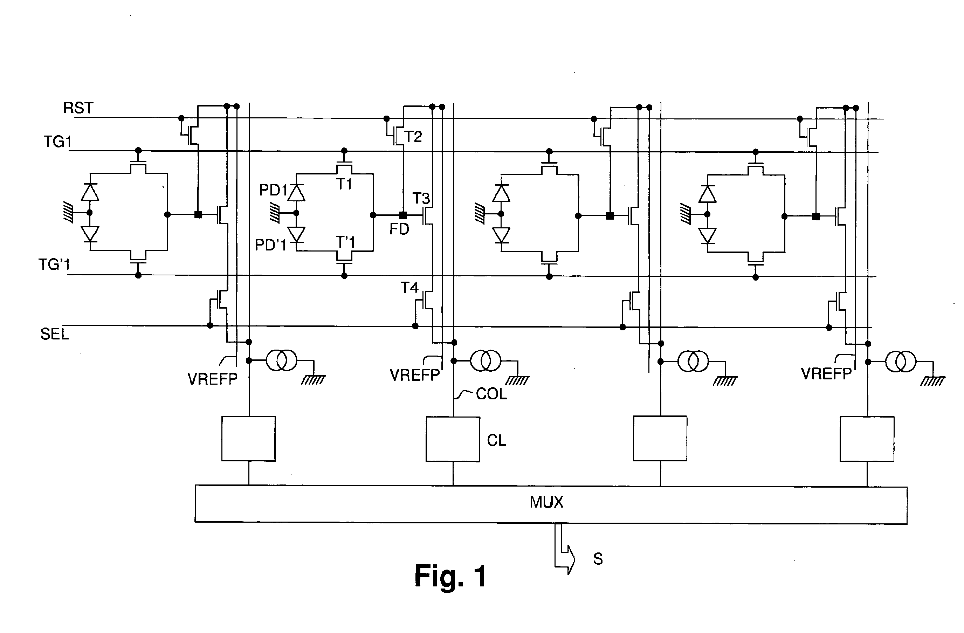

La figure 1 représente la configuration des pixels du capteur selon l'invention. Il y a deux lignes de pixels adjacentes. Les pixels de même rang dans les deux lignes sont situés l'un à côté de l'autre, alignés dans le sens de défilement de l'image, de haut en bas sur la figure 1. Chaque pixel comprend une photodiode pour convertir les photons en charges électriques et un noeud de stockage de charges qui sert à stocker temporairement les charges générées pour permettre ensuite leur lecture.

La photodiode est de préférence une photodiode dite "pinned", de l'anglais qui signifie "épinglé" et qui indique que le potentiel interne de la photodiode est maintenu, en l'absence de charges photogénérées, à une valeur fixe grâce à une diffusion superficielle portée au potentiel du substrat semiconducteur dans lequel est réalisée la photodiode.

Le noeud de stockage FD est une diffusion flottante dans laquelle les charges peuvent être déversées, et conservées pendant le temps nécessaire pour les lire.

Le noeud de stockage de charges est partagé entre les deux pixels de même rang appartenant aux deux lignes. On a désigné par FD le noeud de stockage correspondant à l'ensemble des deux pixels. La photodiode est individuelle et il y a donc une photodiode par pixel, désignée respectivement par PD1 et PD'1 pour les photodiodes correspondant aux pixels de même rang. De préférence, la constitution physique est symétrique et telle que les pixels sont disposés de part et d'autre de leur noeud de stockage commun, afin qu'on puisse déverser les charges des deux photodiodes dans le même noeud de stockage situé entre les deux photodiodes.

La distance entre les pixels de même rang, c'est-à-dire par exemple la distance entre les centres des photodiodes de ces deux pixels, est connue et est la même pour tous les pixels dans les deux lignes. Cette distance est importante pour le fonctionnement en mode TDI. En effet, il faudra assurer un synchronisme entre la vitesse de défilement d'une ligne de scène observée passant successivement devant les deux lignes de pixels et les instants de transferts de charge des photodiodes vers le noeud de stockage. Le principe est en effet de déverser dans le noeud de stockage d'abord les charges générées dans la photodiode d'un pixel par l'observation d'une portion d'image pendant une durée déterminée puis les charges générées dans la photodiode de même rang de l'autre ligne de pixels pendant la même durée et pendant que le même point d'image est vu par la deuxième photodiode.

Les pixels comprennent encore, outre la photodiode individuelle PD1, PD'1 et le noeud de stockage commun FD, un transistor de transfert respectif T1, T'1 reliant une photodiode respective PD1, PD'1 au noeud de stockage commun et permettant d'autoriser le transfert vers le noeud de stockage des charges de l'une ou de l'autre des photodiodes, par mise en conduction de l'un ou l'autre de ces transistors. Le transistor de transfert T1 ou T'1 est essentiellement constitué par une grille de transfert adjacente à la photodiode et au noeud de stockage. La photodiode et le noeud de stockage constituent la source et le drain du transistor. Le transistor de transfert T1 est commandé par un conducteur TG1 commun à tous les pixels de la première ligne. Le transistor de transfert T'1 est commandé par un conducteur TG'1 commun à tous les pixels de la deuxième ligne du capteur.

Un transistor T2 de réinitialisation du noeud de stockage, commun aux deux pixels, permet de réinitialiser à un potentiel de référence VREFP le potentiel du noeud de stockage. Ce transistor est commandé par conducteur de commande RST commun à tous les pixels des deux lignes.

Un transistor de lecture T3, commun aux deux pixels, a sa grille reliée au noeud de stockage et il est monté en suiveur de tension pour permettre de transférer sur sa source un potentiel correspondant au potentiel du noeud de stockage. Son drain est relié à un potentiel d'alimentation qui peut être (mais pas obligatoirement) le potentiel VREFP.

Enfin, un transistor d'activation T4, commun aux deux pixels, permet de relier la source du transistor suiveur T3 à un conducteur dit "conducteur de colonne" COL associé aux deux pixels de même rang. Il y a un conducteur de colonne respectif pour chaque rang dans la ligne. Le transistor d'activation T4 est commandé par un conducteur SEL commun à tous les pixels des deux lignes. Ce transistor T4 et son conducteur de commande sont facultatifs si le capteur ne comporte que deux lignes de pixels : la source du transistor de lecture T3 pourrait être reliée directement au conducteur de colonne. Le transistor T4 pourrait être utile si plusieurs groupes indépendants de deux lignes, utilisant les mêmes conducteurs de colonne, étaient formés sur le capteur (les deux groupes ne fonctionnant pas ensemble en mode TDI mais les deux lignes d'un groupe fonctionnant en mode TDI).

Le conducteur de colonne est de préférence relié à une source de courant constant qui permet au transistor T3 de se comporter en suiveur de tension lorsque le transistor T4 est rendu conducteur.

Les charges recueillies par les photodiodes et transférées sur le noeud de stockage FD modifient le potentiel de ce noeud et sont lues sur le conducteur de colonne COL associé aux deux pixels de même rang. Un circuit d'échantillonnage et de conversion analogique numérique est relié au pied du conducteur de colonne. Ce circuit pourrait être commun à toutes les colonnes mais dans ce cas il faudrait aiguiller chaque conducteur de colonne, l'un après l'autre, vers ce circuit commun pour lire successivement les différents pixels. On préfère plutôt avoir un circuit d'échantillonnage et de conversion respectif CL pour chaque colonne comme cela est représenté schématiquement sur la figure 1. Les différents circuits de lecture sont reliés à un multiplexeur qui transmet successivement sur une sortie numérique S les signaux numérisés correspondant aux différents pixels.

Plusieurs modes de réalisation sont possibles en ce qui concerne le circuit de lecture et on commencera par la réalisation la plus simple.

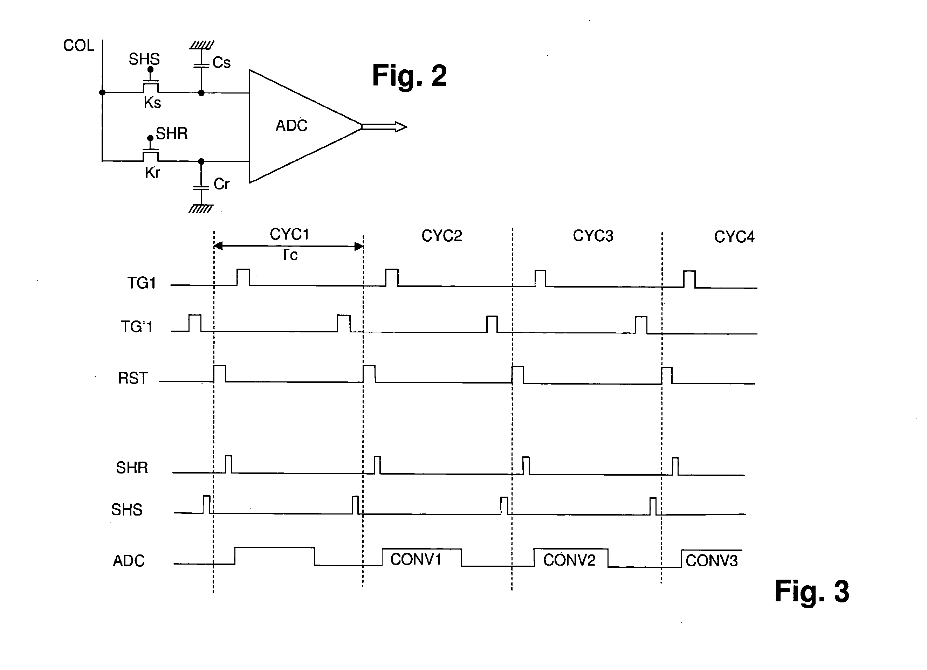

Dans cette réalisation, comme visible à la figure 2, le circuit de lecture CL comporte deux capacités d'échantillonnage Cr et Cs, deux interrupteurs Kr et Ks, et un convertisseur analogique-numérique ADC dont les entrées sont reliées aux deux capacités pour convertir la différence entre les tensions stockées dans les deux capacités. La première capacité Cr est dédiée à l'échantillonnage du niveau de réinitialisation du noeud de stockage. La deuxième est dédiée à l'échantillonnage du niveau représentant l'information utile de luminance recueillie par les pixels.

Le chronogramme de fonctionnement dans ce mode de réalisation est représenté à la figure 3. Les différentes lignes représentent les signaux de commande appliqués aux différents conducteurs TG1, TG'1, RST, ainsi que les signaux SHR et SHS appliqués respectivement aux interrupteurs Kr et Ks.

Les signaux sont établis cycliquement, avec une périodicité Tc qui correspond à la vitesse de défilement de la scène observée devant le capteur : le temps de cycle Tc est le temps mis par une ligne de scène observée pour passer de la première ligne de pixels (photodiodes PD1) à la deuxième ligne de pixels (photodiodes PD'1). En général le défilement sera continu mais on peut aussi envisager qu'il soit discontinu, la ligne de scène restant devant la première ligne de pixels pendant un temps de cycle puis se déplaçant sur la deuxième ligne de pixels et y restant le même temps de cycle.

Les cycles de lecture sont visibles sur la figure 3 et sont numérotés CYC1, CYC2, CYC3. Chaque cycle comprend successivement les opérations suivantes,:
- émission d'une impulsion brève sur la ligne RST pour la réinitialisation du potentiel du noeud de stockage FD, et en conséquence vidage des charges présentes dans ce noeud ;
- émission d'une impulsion brève SHR de fermeture de l'interrupteur Kr, chargeant dans la capacité Cr au niveau de potentiel présent sur le conducteur de colonne et représentant le niveau de réinitialisation du noeud de stockage ;
- émission sur la ligne TG1 d'une impulsion brève de transfert rendant conducteur le transistor de transfert T1 ; les charges intégrées par la photodiode PD1 pendant le cycle précédent (depuis la fin de l'impulsion brève TG1 du cycle précédent) se déversent dans le noeud de stockage FD ; le début de l'impulsion TG1 se situe peu après le début du cycle mais quand même après la fin de l'impulsion SHR ;
- vers la fin du cycle, très peu avant l'impulsion de réinitialisation (sur la ligne RST) appartenant au cycle suivant : émission sur la ligne TG'1 d'une impulsion brève de transfert rendant conducteur le transistor de transfert T'1 ; les charges intégrées par la photodiode PD'1 pendant ce cycle (depuis la fin de l'impulsion de transfert TG'1 du cycle précédent) sont déversées dans le noeud de stockage FD qui contient déjà les charges intégrées au cycle précédent par la photodiode PD1.
- puis, comme dernière étape du cycle, émission d'une impulsion brève SHS qui ferme l'interrupteur Ks et qui échantillonne dans la capacité Cs un niveau de potentiel représentant le potentiel du noeud de stockage après le double déversement de charges.

A noter : la ligne SEL, si elle existe, est activée (transistor T4 conducteur) au moins pendant les impulsions SHR et SHS.

Ainsi, on a échantillonné dans la capacité Cs la somme des charges intégrées pendant un cycle de durée Tc par la photodiode PD1 et des charges intégrées pendant le cycle suivant de durée Tc par la photodiode PD'1. Comme la photodiode PD'1 observe la scène avec un décalage correspondant au temps de cycle Tc, la somme de charges correspond bien à l'observation d'une même ligne d'image par les deux lignes de photodiodes et on fonctionne donc en mode TDI. Le potentiel de réinitialisation du noeud de stockage stocké dans la capacité Cr sert à faire une mesure différentielle.

La conversion analogique-numérique se produit après la fin du cycle, c'est-à-dire pendant le cycle suivant. Il faudrait théoriquement avoir le temps de faire la conversion analogique-numérique immédiatement après l'impulsion SHS mais avant l'impulsion SHR du cycle suivant qui la suit de très près. En pratique on n'a pas le temps car ces impulsions sont très rapprochées. On est donc obligé de faire la conversion analogique-numérique seulement après cette deuxième impulsion d'échantillonnage SHR (les durées nécessaires à la conversion CONV1, CONV2, CONV3, de la figure 3 sont relatives aux cycles qui précèdent CYC1, CYC2, CYC3). Autrement dit, on remplit le noeud de stockage de charges, puis on le vide et on fait la différence entre le niveau rempli et le niveau ultérieurement vidé. Il s'agit alors d'un double échantillonnage mais non corrélé. Un double échantillonnage corrélé exigerait de vider le noeud de stockage et de le remplir ensuite pour voir quelle est la véritable contribution due au remplissage. Un double échantillonnage corrélé est bien préférable pour réduire le bruit, dit bruit kTC, qui est produit par les petites variations du niveau de réinitialisation du noeud de stockage à chaque commutation.

Pour permettre un double échantillonnage corrélé, le capteur d'image comprend des moyens pour stocker au cours d'un premier cycle un premier échantillon représentant le potentiel du noeud de stockage après la réinitialisation de ce premier cycle et avant les deux transferts de charges de ce cycle, des moyens pour stocker un deuxième échantillon de potentiel représentant le potentiel du noeud de stockage après les deux transferts de charge des photodiodes vers le noeud de stockage pour ce cycle, des moyens pour stocker séparément du premier échantillon et sans perdre le premier échantillon un troisième échantillon représentant le potentiel du noeud de stockage après la réinitialisation d'un deuxième cycle, et des moyens pour faire pendant le deuxième cycle la conversion analogique-numérique de la différence entre le deuxième et le premier échantillon.

Deux capacités distinctes sont alors prévues pour stocker respectivement le premier et le troisième échantillon afin de ne pas perdre le premier échantillon lorsqu'on recueille le troisième échantillon.

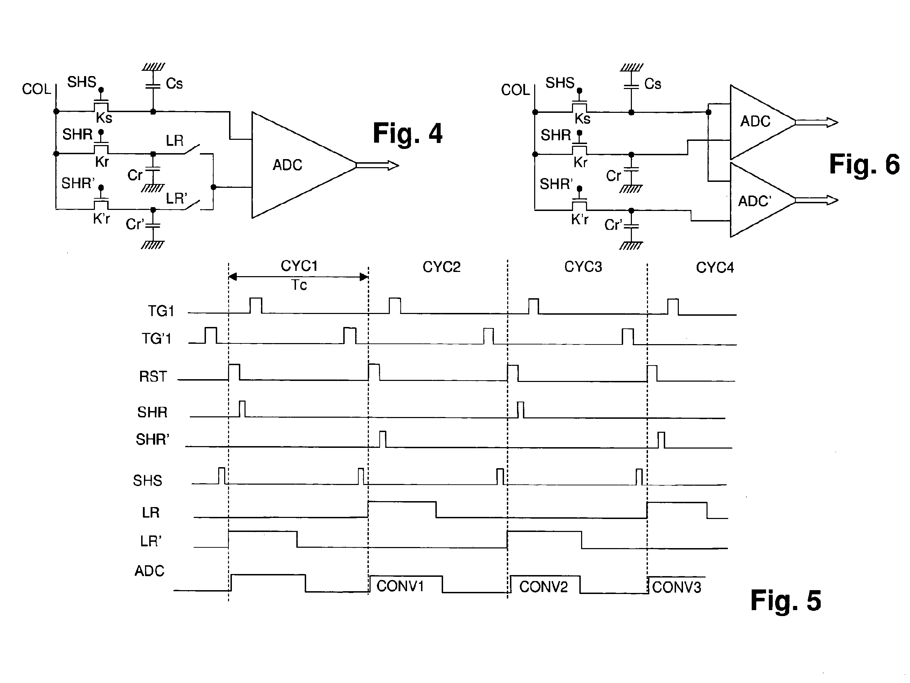

La figure 4 représente un mode de réalisation de circuit de lecture permettant un double échantillonnage corrélé. Il comprend trois capacités Cr, Cr' et Cs, des interrupteurs Kr, Kr' et Ks commandés par des signaux respectifs SHR, SHR', et SHS permettant de stocker le niveau de potentiel du conducteur de colonne dans les capacités respectives Cr, Cr' et Cs, et enfin deux interrupteurs LR et LR' connectés entre une entrée du convertisseur analogique-numérique ADC et les capacités Cr et Cr'.

Par cette disposition, on peut stocker un niveau de potentiel de réinitialisation soit dans la première capacité Cr lors d'une impulsion brève SHR, soit dans la troisième capacité Cr' lors d'une impulsion brève Cr'. Le niveau de potentiel après remplissage du noeud de stockage est quant à lui toujours stocké dans la deuxième capacité Cs par une impulsion SHS. La capacité Cs est reliée à l'autre entrée du convertisseur. Par un choix de l'actionnement de l'interrupteur LR ou de l'interrupteur LR', on sélectionne la première capacité Cr ou la troisième capacité Cr' en vue de convertir la différence de tensions entre la capacité Cs et l'une des deux capacités Cr ou Cr' au choix.

Le circuit fonctionne alors avec le chronogramme de la figure 5, décomposé comme celui de la figure 3 en cycles successifs de rangs impairs et pairs CYC1, CYC2, CYC3 de durée Tc chacun correspondant au temps de déplacement d'une ligne d'image de la première ligne de pixels jusqu'à la deuxième.

Le premier cycle comprend successivement les opérations suivantes :
- émission d'une impulsion brève sur la ligne RST pour la réinitialisation du potentiel du noeud de stockage FD, et en conséquence vidage des charges présentes dans ce noeud ;
- émission d'une impulsion brève SHR de fermeture de l'interrupteur Kr, chargeant dans la première capacité Cr un niveau de potentiel présent sur le conducteur de colonne et représentant le niveau de réinitialisation du noeud de stockage ;
- émission sur la ligne TG1 d'une impulsion brève de transfert rendant conducteur le transistor de transfert T1 ; les charges intégrées par la photodiode PD1 pendant le cycle précédent (depuis la fin de l'impulsion brève TG1 du cycle précédent) se déversent dans le noeud de stockage FD ; le début de l'impulsion TG1 se situe peu après le début du cycle mais quand même après la fin de l'impulsion SHR ;
- vers la fin du cycle, très peu avant l'impulsion de réinitialisation (sur la ligne RST) appartenant au cycle suivant : émission sur la ligne TG'1 d'une impulsion brève de transfert rendant conducteur le transistor de transfert T'1 ; les charges intégrées par la photodiode PD'1 pendant ce cycle (depuis la fin de l'impulsion de transfert TG'1 du cycle précédent) sont déversées dans le noeud de stockage FD qui contient déjà les charges intégrées au cycle précédent par la photodiode PD1.
- en fin de cycle : émission d'une impulsion brève SHS qui ferme l'interrupteur Ks et qui échantillonne dans la deuxième capacité Cs un niveau de potentiel représentant le potentiel du noeud de stockage après le double déversement de charges.

Le deuxième cycle est identique au premier à l'exception du fait qu'on émet une impulsion SHR' à la place de l'impulsion SHR, et par conséquent le potentiel de réinitialisation du noeud de stockage est échantillonné dans la troisième capacité Cr' et non dans la première Cr. Le troisième cycle redevient comme le premier. On alterne donc le stockage du niveau de réinitialisation dans la capacité Cr aux cycles impairs et dans la capacité Cr' aux cycles pairs.

A la fin des cycles impairs, après émission de l'impulsion SHS, on effectue la conversion analogique-numérique de la différence entre la tension stockée dans la capacité Cs et la tension stockée dans la capacité Cr. Au contraire à la fin des cycles pairs, après l'émission de l'impulsion SHS, on effectue la conversion analogique-numérique de la différence entre la tension stockée dans la capacité Cs et la tension stockée dans la capacité Cr. L'interrupteur LR est donc fermé en vue de cette conversion à la fin des cycles impairs, alors que c'est l'interrupteur LR' qui est fermé à la fin des cycles pairs en vue de la conversion.

On a le temps d'effectuer ces conversions. En effet lorsqu'on utilise pour la conversion l'information contenue dans la capacité Cr, interrupteur LR fermé, on n'est pas gêné par le fait qu'on échantillonne très vite un nouveau niveau de réinitialisation ; le nouveau niveau est échantillonné dans l'autre capacité Cr' sans perturber le niveau de la capacité Cr. Inversement, à la fin d'un cycle pair, la réinitialisation du noeud de stockage et son échantillonnage dans la capacité Cr ne perturbe pas l'information contenue dans la capacité Cr'. On peut donc faire une conversion avec un double échantillonnage corrélé dans lequel la différence se fait bien entre un niveau de réinitialisation et un niveau de remplissage de charges qui suit la réinitialisation et non le contraire.

Dans le cas de la figure 4, les interrupteurs LR et LR' servent à aiguiller alternativement la capacité Cr ou la capacité Cr' vers une entrée du convertisseur, l'autre entrée étant toujours reliée à la capacité Cs.

Dans une variante de réalisation représentée à la figure 6, au lieu d'utiliser des interrupteurs LR et LR' pour aiguiller vers le convertisseur alternativement au cours des cycles successifs soit la capacité Cr soit la capacité Cr', on peut prévoir que le circuit de lecture comprend deux convertisseurs analogique-numérique ADC et ADC' dont l'un convertit la différence entre l'échantillon contenu dans la capacité Cs et l'échantillon contenu dans la capacité Cr, et l'autre convertit la différence entre l'échantillon contenu dans la capacité Cs et l'échantillon contenu dans la capacité Cr'. Les sorties des convertisseurs ADC et ADC' sont utilisés alternativement au cours des cycles impairs et pairs de manière que la mesure soit toujours faite par double échantillonnage corrélé. Les capacités Cr et Cr' sont alors reliées directement, sans les interrupteurs LR et LR', aux convertisseurs.

Les conversions peuvent être systématiques dans les deux convertisseurs avec une périodicité Tc, et dans ce cas on sélectionne la sortie d'un convertisseur en fin de cycle impair et la sortie de l'autre convertisseur en fin de cycle impair. Ou bien, alternativement, la conversion est faite seulement à la fin des cycles impairs pour le convertisseur ADC et seulement à la fin des cycles impairs pour le convertisseur ADC'.

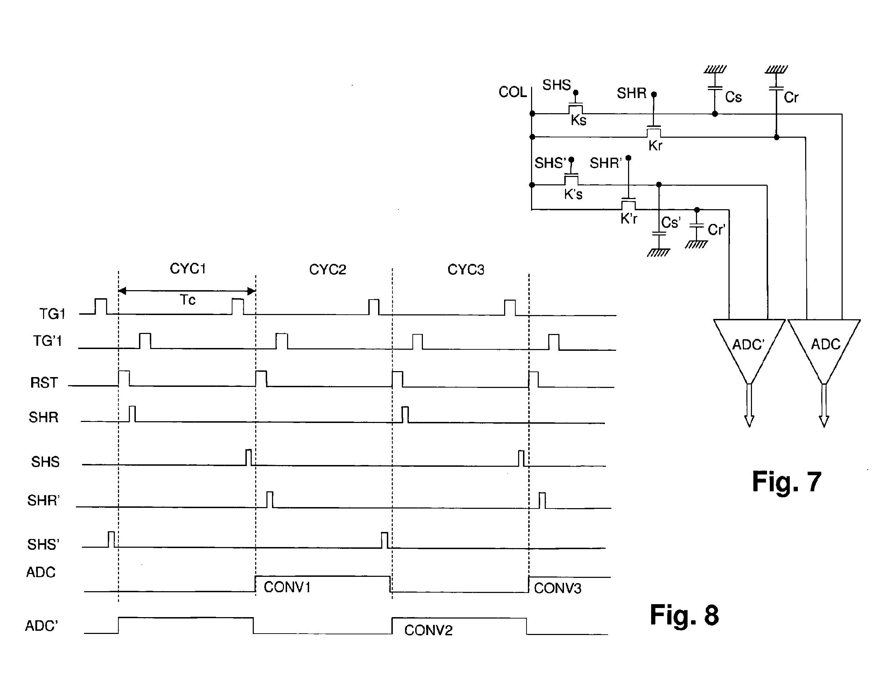

Dans une autre variante de réalisation représentée à la figure 7, on prévoit encore deux convertisseurs ADC et ADC' mais aussi deux capacités Cs et Cs' fonctionnant en alternance (comme les capacités Cr et Cr') pour échantillonner le signal utile un cycle sur deux dans l'une des capacités puis dans l'autre. Chacune des capacités Cs et Cs' est reliée à une entrée d'un convertisseur respectif. Un interrupteur supplémentaire SHS' permet de stocker le signal utile de la colonne dans la capacité Cs'.

Le chronogramme représenté à la figure 8 diffère alors de celui de la figure 5 en ce que les impulsions d'échantillonnage SHS ont une périodicité de deux cycles (2.Tc), de même que les impulsions SHS', et les impulsions SHS sont décalées d'un cycle (durée Tc) par rapport aux impulsions SHS'. Par ailleurs chacun des convertisseurs effectue un échantillonnage avec une périodicité de deux cycles. On dispose donc de plus de temps pour faire la conversion puisque la conversion par un convertisseur ADC (ou ADC') n'a pas besoin d'être terminée lorsqu'arrive une impulsion SHS' (ou SHS) destinée à la capacité Cs' (ou Cs) connectée à l'autre convertisseur. La conversion par l'un des convertisseurs peut d'ailleurs commencer avant que ne soit terminée la conversion effectuée par l'autre.

## Revendications

1. Capteur d'image à transfert de charges fonctionnant en défilement et intégration de charges, le capteur comportant deux lignes adjacentes de P pixels en vue d'une observation d'une même ligne d'image successivement par les deux lignes de pixels avec une sommation des charges électriques générées par un point d'image dans les deux pixels de même rang des deux lignes, les pixels étant des pixels actifs de technologie MOS comprenant une photodiode (PD1, PD'1), un noeud de stockage de charges (FD) et des moyens de transfert de charges (T1, T'1) de la photodiode vers le noeud de stockage, constitués par une grille adjacente à la photodiode et au noeud de stockage, le capteur comprenant en outre des moyens de séquencement pour établir un cycle périodique comprenant successivement une réinitialisation du potentiel du noeud de stockage, un échantillonnage du potentiel réinitialisé du noeud de stockage, un premier transfert de charges de la photodiode du premier pixel vers le noeud de stockage immédiatement après l'échantillonnage, **caractérisé en ce que** le noeud de stockage de charges est commun aux deux pixels de même rang, et **en ce que** les moyens de séquencement sont agencés pour effectuer ensuite un deuxième transfert de charges de la photodiode du deuxième pixel vers le noeud de stockage à la fin du cycle périodique, sans réinitialisation du potentiel du noeud de stockage entre les deux transferts, et un échantillonnage du potentiel du noeud de stockage après le deuxième transfert de charges.

2. Capteur d'image selon la revendication 1, **caractérisé en ce qu'**il comporte des moyens (SHR) pour stocker au cours d'un premier cycle un premier échantillon représentant le potentiel du noeud de stockage après la réinitialisation de ce premier cycle et avant les deux transferts de charges de ce cycle, des moyens (SHS) pour stocker un deuxième échantillon de potentiel représentant le potentiel du noeud de stockage après les deux transferts de charge des photodiodes vers le noeud de stockage pour ce cycle, des moyens (SHR') pour stocker séparément du premier échantillon, et sans perdre le premier échantillon, un troisième échantillon représentant le potentiel du noeud de stockage après la réinitialisation d'un deuxième cycle, et des moyens pour faire pendant le deuxième cycle la conversion analogique-numérique de la différence entre le deuxième et le premier échantillon.

3. Capteur d'image selon la revendication 2, **caractérisé en ce qu'**il comporte une première et une troisième capacités distinctes (Cr, Cr') pour stocker respectivement le premier et le troisième échantillons, des moyens de commutation (LR, LR') pour relier alternativement l'une ou l'autre des deux capacités à une entrée d'un convertisseur analogique-numérique (ADC) au cours de cycles successifs, et une deuxième capacité (Cs) reliée à une autre entrée du convertisseur pour stocker le deuxième échantillon, le premier échantillon étant stocké alternativement dans l'une puis dans l'autre des deux premières capacités au cours des cycles successifs.

4. Capteur d'image selon la revendication 2, **caractérisé en ce qu'**il comporte deux convertisseurs analogique-numérique (ADC, ADC'), une première et une troisième capacités (Cr, Cr') pour prélever respectivement le premier et le troisième échantillons, chacune des deux capacités étant reliée à une première entrée d'un convertisseur respectif, et une deuxième capacité (Cs) reliée à une deuxième entrée de chacun des convertisseurs pour stocker le deuxième échantillon, les convertisseurs étant utilisés alternativement au cours des cycles successifs pour fournir une conversion de la différence entre l'échantillon stocké dans la deuxième capacité et l'échantillon stocké dans la première ou la troisième capacités.

5. Capteur d'image selon l'une des revendications 3 et 4, caractérisé en ce les moyens de séquencement sont agencés pour exécuter cycliquement les opérations successives suivantes au cours d'une alternance de cycles impairs et de cycles pairs :
a) au début d'un cycle, une réinitialisation du potentiel du noeud de stockage de charge,
b) puis un échantillonnage du potentiel du noeud de stockage dans la première capacité (Cr) pour un cycle impair, ou de la troisième capacité (Cr') pour un cycle pair,
c) puis un transfert total de charges de la photodiode du premier pixel vers le noeud de stockage,
d) puis, vers la fin du cycle, un transfert total des charges de la photodiode du deuxième pixel vers le noeud de stockage,
e) puis un échantillonnage du potentiel du noeud de stockage dans la deuxième capacité,
f) puis, au cours du cycle suivant, la réinitialisation du potentiel du noeud de stockage et un deuxième échantillonnage de ce potentiel dans la troisième capacité (Cr') pour un cycle suivant pair ou dans la première capacité (Cr) pour un cycle suivant impair, et enfin la conversion analogique-numérique de la différence entre l'échantillon stocké dans la deuxième capacité à l'étape e et l'échantillon stocké dans la première ou la troisième capacité à l'étape b, les rôles des première et troisième capacités étant ainsi interchangés à chaque cycle.

6. Capteur d'image selon la revendication 2, **caractérisé en ce qu'**il comporte deux convertisseurs analogique-numérique (ADC, ADC'), une première et une troisième capacités (Cr, Cr') pour prélever respectivement le premier et le troisième échantillons, chacune des deux capacités étant reliée à une première entrée d'un convertisseur respectif, et une deuxième et une quatrième capacités (Cs, Cs') reliées respectivement à une deuxième entrée de chacun des convertisseurs pour stocker le deuxième échantillon en alternance un cycle sur deux, l'un des convertisseurs fournissant une conversion de la différence entre l'échantillon stocké dans la deuxième capacité et l'échantillon stocké dans la première capacité, l'autre convertisseur fournissant une conversion de la différence entre l'échantillon stocké dans la quatrième capacité et l'échantillon stocké dans la troisième capacité.

7. Capteur d'image selon la revendication 6, **caractérisé en ce que** les moyens de séquencement sont agencés pour exécuter cycliquement les opérations successives suivantes au cours d'une alternance de cycles impairs et de cycles pairs :
a) au début d'un cycle, une réinitialisation du potentiel du noeud de stockage de charge,
b) puis un échantillonnage du potentiel du noeud de stockage dans la première capacité (Cr) pour un cycle impair, ou de la troisième capacité (Cr') pour un cycle pair,
c) puis un transfert total de charges de la photodiode du premier pixel vers le noeud de stockage,
d) puis, vers la fin du cycle, un transfert total des charges de la photodiode du deuxième pixel vers le noeud de stockage,
e) puis un échantillonnage du potentiel du noeud de stockage dans la deuxième capacité pour un cycle impair ou la quatrième capacité pour un cycle pair,
f) puis, au cours du cycle suivant, la réinitialisation du potentiel du noeud de stockage et un deuxième échantillonnage de ce potentiel dans la troisième capacité pour un cycle suivant pair ou dans la première capacité pour un cycle suivant impair, et enfin la conversion analogique-numérique par le premier convertisseur pendant le cycle suivant pair de la différence entre l'échantillon stocké dans la deuxième capacité et l'échantillon stocké dans la première capacité ou la conversion analogique-numérique pendant le cycle suivant impair par le deuxième convertisseur de la différence entre l'échantillon stocké dans la quatrième capacité et l'échantillon stocké dans la troisième capacité.

8. Capteur d'image selon l'une des revendications 1 à 7, **caractérisé en ce que** chaque pixel comprend, outre la photodiode spécifique au pixel et le noeud de stockage commun aux deux pixels de même rang : un transistor respectif de transfert (T1, T'1) entre chaque photodiode (PD1, PD'1) et le noeud de stockage commun (FD), un transistor de réinitialisation (T2) commun aux deux pixels, ayant sa source reliée au noeud de stockage, et un transistor de lecture (T3) commun aux deux pixels et ayant sa grille reliée au noeud de stockage.

## Patentansprüche

1. Bildsensor zum Übertragen von Ladungen, der durch Abziehen und Integrieren von Ladungen arbeitet, wobei der Sensor zwei benachbarte Zeilen von P Pixeln zwecks Beobachtung einer selben Bildzeile nacheinander durch die beiden Pixelzeilen mit einer Summierung von elektrischen Ladungen umfasst, die von einem Bildpunkt in den beiden Pixeln desselben Rangs von zwei Zeilen erzeugt werden, wobei die Pixel aktive Pixel nach MOS-Technologie sind, umfassend eine Fotodiode (PD1, PD'1), einen Ladungsspeicherknoten (FD) sowie Mittel (T1, T'1) zum Übertragen von Ladungen der Fotodiode zum Speicherknoten, gebildet durch ein Gate neben der Fotodiode und dem Speicherknoten, wobei der Sensor ferner Sequenzierungsmittel umfasst, um einen periodischen Zyklus zu erzeugen, der nacheinander eine Neuinitialisierung des Potentials des Speicherknotens, eine Abtastung des neu initialisierten Potentials des Speicherknotens, eine erste Übertragung von Ladungen der Fotodiode des ersten Pixels zu dem Speicherknoten unmittelbar nach der Abtastung umfasst, **dadurch gekennzeichnet, dass** der Ladungsspeicherknoten den beiden Pixeln desselben Rangs gemeinsam ist, und dadurch, dass die Sequenzierungsmittel so ausgelegt sind, dass sie dann eine zweite Überaagung von Ladungen der Fotodiode des zweiten Pixels zum Speicherknoten am Ende des periodischen Zyklus, ohne Neuinitialisierung des Potentials des Speicherknotens zwischen den beiden Übertragungen, und eine Abtastung des Potentials des Speicherknotens nach der zweiten Ladungsübertragung bewirken.

2. Bildsensor nach Anspruch 1, **dadurch gekennzeichnet, dass** er Folgendes umfasst: Mittel (SHR) zum Speichern, im Laufe eines ersten Zyklus, eines ersten Sample, das das Potential des Speicherknotens nach der Neuinitialisierung dieses ersten Zyklus und vor den beiden Ladungsübertragunen dieses Zyklus repräsentiert, Mittel (SHS) zum Speichern eines zweiten Potentialsample, das das Potential des Speicherknotens nach den beiden Übertragungen von Ladungen der Fotodioden zum Speicherknoten für diesen Zyklus repräsentiert, Mittel (SHR') zum separaten Speichern des ersten Sample und ohne Verlust des ersten Sample, wobei ein drittes Sample das Potential des Speicherknotens nach der Neuinitialisierung eines zweiten Zyklus repräsentiert, und Mittel zum Durchrühren, während des zweiten Zyklus, einer Analog-Digital-Umwandlung der Differenz zwischen dem zweiten und dem ersten Sample.

3. Bildsensor nach Anspruch 2, **dadurch gekennzeichnet, dass** er ein erstes und ein drittes separates C-Glied (Cr, Cr') zum jeweiligen Speichern des ersten und dritten Sample, Schaltmittel (LR, LR') zum alternativen Verbinden des einen oder anderen der C-Glieder mit einem Eingang eines Analog-Digital-Wandlers (ADC) im Laufe der aufeinander folgenden Zyklen sowie ein zweites C-Glied (Cs) in Verbindung mit einem anderen Eingang des Wandlers zum Speichern des zweiten Sample umfasst, wobei das erste Sample alternativ im einen und dann im anderen der beiden ersten C-Glieder im Laufe der aufeinander folgenden Zyklen gespeichert wird.

4. Bildsensor nach Anspruch 2, **dadurch gekennzeichnet, dass** er zwei Analog-Digital-Wandler (ADC, ADC'), ein erstes und ein drittes C-Glied (Cr, Cr') zum jeweiligen Nehmen des ersten und dritten Sample, wobei jedes der beiden C-Glieder mit einem ersten Eingang eines jeweiligen Wandlers verbunden ist, und ein zweites C-Glied (Cs) umfasst, das mit einem zweiten Eingang jedes der Wandler zum Speichern des zweiten Sample verbunden ist, wobei die Wandler alternativ im Laufe der aufeinander folgenden Zyklen benutzt werden, um eine Umwandlung der Differenz zwischen dem im zweiten Kapazität gespeicherten Sample und dem im ersten oder dritten C-Glied gespeicherten Sample zu liefern.

5. Bildsensor nach einem der Ansprüche 3 und 4, **dadurch gekennzeichnet, dass** die Sequenzierungsmittel zum zyklischen Ausführen der folgenden aufeinander folgenden Vorgänge im Laufe einer Wechselfolge von ungeradzahligen Zyklen und geradzahligen Zyklen ausgestaltet sind:
a) am Anfang eines Zyklus eine Neuinitialisierung des Potentials des Ladungsspeicherknotens,
b) dann eine Abtastung des Potentials des Speicherknotens im ersten C-Glied (Cr) für einen ungeradzahligen Zyklus oder im dritten C-Glied (Cr') für einen geradzahligen Zyklus,
c) dann eine Gesamtübertragung von Ladungen der Fotodiode des ersten Pixels zum Speicherknoten,
d) dann, gegen Ende des Zyklus, eine Gesamtübertragung von Ladungen der Fotodiode des zweiten Pixels zum Speicherknoten,
e) dann eine Abtastung des Potentials des Speicherknotens im zweiten C-Glied,
f) dann, im Laufe des folgenden Zyklus, die Neuinitialisierung des Potentials des Speicherknotens und eine zweite Abtastung dieses Potentials im dritten C-Glied (Cr') für einen folgenden geradzahligen Zyklus oder im ersten C-Glied (Cr) für einen folgenden ungeradzahligen Zyklus, und schließlich die Analog-Digital-Umwandlung der Differenz zwischen dem in Schritt e im zweiten C-Glied gespeicherten Sample und dem in Schritt b im ersten oder dritten C-Glied gespeicherten Sample, wobei die Rollen des ersten und dritten C-Gliedes so bei jedem Zyklus vertauscht werden.

6. Bildsensor nach Anspruch 2, **dadurch gekennzeichnet, dass** er zwei Analog-Digital-Wandler (ADC, ADC'), ein erstes und ein drittes C-Glied (Cr, Cr') zum jeweiligen Nehmen des ersten und dritten Sample, wobei jedes der beiden C-Glieder jeweils mit einem ersten Eingang eines jeweiligen Wandlers verbunden ist, und ein zweites und ein viertes C-Glied (Cs, Cs') umfasst, die jeweils mit einem zweiten Eingang jedes der Wandler zum Speichern des zweiten Sample abwechselnd in jedem zweiten Zyklus verbunden sind, wobei einer der Wandler eine Umwandlung der Differenz zwischen dem im zweiten C-Glied gespeicherten Sample und dem im ersten C-Glied gespeicherten Sample liefern, wobei der andere Wandler eine Umwandlung der Differenz zwischen dem im vierten C-Glied gespeicherten Sample und dem im dritten C-Glied gespeicherten Sample liefert.

7. Bildsensor nach Anspruch 6, **dadurch gekennzeichnet, dass** die Sequenzierungsmittel zum zyklischen Ausführen der aufeinander folgenden Operationen im Laufe einer Wechselfolge von ungeradzahligen und geradzahligen Zyklen ausgestaltet sind:
a) am Anfang eines Zyklus eine Neuinitialisierung des Potentials des Ladungsspeicherknotens,
b) dann eine Abtastung des Potentials des Speicherknotens im ersten C-Glied (Cr) für einen ungeradzahligen Zyklus oder im dritten C-Glied (Cr') für einen geradzahligen Zyklus,
c) dann eine Gesamtübertragung von Ladungen der Fotodiode des ersten Pixels zum Speicherknoten,
d) dann, gegen Ende des Zyklus, eine Gesamtübertragung der Ladungen der Fotodiode des zweiten Pixels zum Speicherknoten,
e) dann eine Abtastung des Potentials des Speicherknotens im zweiten C-Glied für einen ungeradzahligen Zyklus oder im vierten C-Glied für einen geradzahligen Zyklus,
f) dann, im Laufe des folgenden Zyklus, die Neuinitialisierung des Potentials des Speicherknotens und eine zweite Abtastung dieses Potentials im dritten C-Glied für einen folgenden geradzahligen Zyklus oder im ersten C-Glied für einen folgenden ungeradzahligen Zyklus, und schließlich die Analog-Digital-Umwandlung, durch den ersten Wandler während des folgenden geradzahligen Zyklus, der Differenz zwischen dem im zweiten C-Glied gespeicherten Sample und dem im ersten C-Glied gespeicherten Sample oder die Analog-Digital-Umwandlung während des folgenden ungeradzahligen Zyklus, durch den zweiten Wandler, der Differenz zwischen dem im vierten C-Glied gespeicherten Sample und dem im dritten C-Glied gespeicherten Sample.

8. Bildsensor nach einem der Ansprüche 1 bis 7, **dadurch gekennzeichnet, dass** jedes Pixel außer der für das Pixel spezifischen Fotodiode und dem den beiden Pixeln desselben Rangs gemeinsamen Speicherknoten Folgendes umfasst: einen jeweiligen Transfertransistor (T1, T'1) zwischen jeder Fotodiode (PD1, PD'1) und dem gemeinsamen Speicherknoten (FD), einen den beiden Pixeln gemeinsamen Neuinitialisierungstransistor (T2), dessen Source mit dem Speicherknoten verbunden ist, und einen den beiden Pixeln gemeinsamen Lesetransistor (T3), dessen Gate mit dem Speicherknoten verbunden ist.

## Claims

1. Charge transfer image sensor operating by movement and charge integration, the sensor comprising two adjacent lines of P pixels with a view to observation of one and the same image line successively by the two lines of pixels with summation of the electrical charge generated by an image point in the two pixels of same rank of the two lines, the pixels being MOS technology active pixels comprising a photodiode (PD1, PD'1), a charge storage node (FD) and means for transferring charge (T1, T'1) from the photodiode to the storage node, consisting of a gate adjacent to the photodiode and to the storage node, the sensor further comprising sequencing means for establishing a periodic cycle comprising successively a reinitialization of the potential of the storage node, a sampling of the reinitialized potential of the storage node, a first transfer of charge from the photodiode of the first pixel to the storage node immediately after the sampling, **characterized in that** the charge storage node is common to the two pixels of same rank, and **in that** the sequencing means are designed to execute a second transfer of charge from the photodiode of the second pixel to the storage node at the end of the periodic cycle, without reinitialization of the potential of the storage node between the two transfers, and a sampling of the potential of the storage node after the second transfer of charge.

2. Image sensor according to Claim 1, **characterized in that** it comprises means (SHR) for storing in the course of a first cycle a first sample representing the potential of the storage node after the reinitialization of this first cycle and before the two transfers of charge of this cycle, means (SHS) for storing a second sample of potential representing the potential of the storage node after the two charge transfers from the photodiodes to the storage node for this cycle, means (SHR') for storing separately from the first sample, and without losing the first sample, a third sample representing the potential of the storage node after the reinitialization of a second cycle, and means for effecting during the second cycle the analogue-digital conversion of the difference between the second and the first sample.

3. Image sensor according to Claim 2, **characterized in that** it comprises a first and a third distinct capacitors (Cr, Cr') for storing respectively the first and the third samples, switching means (LR, LR') for alternately linking one or the other of the two capacitors to an input of an analogue-digital converter (ADC) in the course of successive cycles, and a second capacitor (Cs) linked to another input of the converter for storing the second sample, the first sample being stored alternately in one and then in the other of the first two capacitors in the course of the successive cycles.

4. Image sensor according to Claim 2, **characterized in that** it comprises two analogue-digital converters (ADC, ADC'), a first and a third capacitor (Cr, Cr') for tapping off respectively the first and the third samples, each of the two capacitors being linked to a first input of a respective converter, and a second capacitor (Cs) linked to a second input of each of the converters for storing the second sample, the converters being used alternately in the course of the successive cycles to provide a conversion of the difference between the sample stored in the second capacitor and the sample stored in the first or the third capacitors.

5. Image sensor according to one of Claims 3 and 4, **characterized in that** the sequencing means are designed to cyclically execute the following successive operations in the course of an alternation of odd cycles and even cycles:
a) at the start of a cycle, a reinitialization of the potential of the charge storage node,
b) then a sampling of the potential of the storage node in the first capacitor (Cr) for an odd cycle, or of the third capacitor (Cr') for an even cycle,
c) then a total transfer of charge from the photodiode of the first pixel to the storage node,
d) then, towards the end of the cycle, a total transfer of the charge from the photodiode of the second pixel to the storage node,
e) then a sampling of the potential of the storage node in the second capacitor,
f) then, in the course of the following cycle, the reinitialization of the potential of the storage node and a second sampling of this potential in the third capacitor (Cr') for a following even cycle or in the first capacitor (Cr) for a following odd cycle, and finally the analogue-digital conversion of the difference between the sample stored in the second capacitor in step e and the sample stored in the first or the third capacitor in step b, the roles of the first and third capacitors thus being interchanged at each cycle.

6. Image sensor according to Claim 2, **characterized in that** it comprises two analogue-digital converters (ADC, ADC'), a first and a third capacitor (Cr, Cr') for tapping off respectively the first and the third samples, each of the two capacitors being linked to a first input of a respective converter, and a second and a fourth capacitor (Cs, Cs') linked respectively to a second input of each of the converters so as to store the second sample in alternation one cycle out of two, one of the converters providing a conversion of the difference between the sample stored in the second capacitor and the sample stored in the first capacitor, the other converter providing a conversion of the difference between the sample stored in the fourth capacitor and the sample stored in the third capacitor.

7. Image sensor according to Claim 6, **characterized in that** the sequencing means are designed to cyclically execute the following successive operations in the course of an alternation of odd cycles and even cycles:
a) at the start of a cycle, a reinitialization of the potential of the charge storage node,
b) then a sampling of the potential of the storage node in the first capacitor (Cr) for an odd cycle, or of the third capacitor (Cr') for an even cycle,
c) then a total transfer of charge from the photodiode of the first pixel to the storage node,
d) then, towards the end of the cycle, a total transfer of the charge from the photodiode of the second pixel to the storage node,
e) then a sampling of the potential of the storage node in the second capacitor for an odd cycle or the fourth capacitor for an even cycle,
f) then, in the course of the following cycle, the reinitialization of the potential of the storage node and a second sampling of this potential in the third capacitor for a following even cycle or in the first capacitor for a following odd cycle, and finally the analogue-digital conversion by the first converter during the following even cycle of the difference between the sample stored in the second capacitor and the sample stored in the first capacitor or the analogue-digital conversion during the following odd cycle by the second converter of the difference between the sample stored in the fourth capacitor and the sample stored in the third capacitor.

8. Image sensor according to one of Claims 1 to 7, **characterized in that** each pixel comprises, in addition to the photodiode specific to the pixel and the storage node common to the two pixels of same rank: a respective transfer transistor (T1, T'1) between each photodiode (PD1, PD'1) and the common storage node (FD), a reinitialization transistor (T2) common to the two pixels, having its source linked to the storage node, and a reading transistor (T3) common to the two pixels and having its gate linked to the storage node.
